**Europäisches Patentamt**

(19) **European Patent Office**

**Office européen des brevets**

(11) Veröffentlichungsnummer: **0 054 643**
**B1**

(12) **EUROPÄISCHE PATENTSCHRIFT**

(45) Veröffentlichungstag der Patentschrift:
16.01.85

(51) Int. Cl.⁴: **H 04 B 17/02**

(21) Anmeldenummer: **81108143.9**

(22) Anmeldetag: **09.10.81**

(54) Fernüberwachungseinrichtung mit wenigstens einer Anordnung zur Übertragung von Meldungen nach einem Zeitmultiplex-Frequenzmultiplex-Verfahren.

(30) Priorität: **23.12.80 DE 3048634**

(43) Veröffentlichungstag der Anmeldung:
**30.06.82 Patentblatt 82/26**

(45) Bekanntmachung des Hinweises auf die Patenterteilung:
**16.01.85 Patentblatt 85/3**

(84) Benannte Vertragsstaaten:
**AT DE IT NL**

(56) Entgegenhaltungen:
EP - A - 0 013 944
DE - A - 2 425 384
DE - A - 2 903 493

"Signal und Draht" 54(1962)3, S. 48 bis 51
TELCOM REPORT, Band 2, 1979, Beiheft, Seiten 170-172 Passau, DE. E. AICHHOLZ et al.:
"Fernüberwachungseinrichtung FB40-Z zur unterbrechungsfreien Fehlerortung auf PCM-Übertragungsstrecken"
TELCOM REPORT, Band 4, Nr. 4, August 1981, Seiten 322-325 Passau, De. G. KRINGS et al.: "FBZ40, eine Einrichtung zum Fernüberwachen von 2-Mbit/s-Verbindungen über symmetrische Leiterpaare"
POINT-TO-POINT COMMUNICATION, Band 18, Nr. 1, Januar 1974, Seiten 18-29 New York, U.S.A. P.J.

(73) Patentinhaber: **Siemens Aktiengesellschaft, Berlin und München Wittelsbacherplatz 2, D-8000 München 2 (DE)**

(72) Erfinder: **Krings, Gert, Dipl.-Ing., Linienstrasse 75, D-8024 Deisenhofen (DE)**
Erfinder: **Linow, Heinrich, Stockmannstrasse 10, D-8000 München 71 (DE)**

(56) Entgegenhaltungen: (Fortsetzung)
WAKELING: "A 120Mb/s digital transmission system on coaxial cable"

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Fernüberwachungseinrichtung, insbesondere zur Fehlerortung auf Nachrichten-Übertragungsstrecken, mit wenigstens einer Anordnung zur Übertragung von Meldungen nach einem Zeitmultiplex-Frequenzmultiplex-Verfahren, die eine Überwachungszentrale und meh-rere, über einen gemeinsamen Signalübertragungs-weg mit der Überwachungszentrale verbundene Überwachungsstellen enthält, wobei die Überwachungszentrale einen Sender zum Aussenden von Weiterschaltimpulsen und die mit Meldefrequenzsendern versehenen Überwachungsstellen jeweils einen durch die Weiterschaltimpulse steuerbaren und gemeinsamen in eine Nullstellung überführbaren Wähler zur Überwachung mehrerer Meldungsorte pro Überwachungsstelle und die Überwachungszentrale einen Speicher für die jeweilige Wählerstellung enthalten und Meldungen einer Station mit Hilfe des Wählers in zeitlicher Folge wenigstens einem Meldefrequenzsender zugeführt sind und die Aussendung der Meldefrequenzen in Abhängigkeit vom jeweiligen Meldezustand erfolgt, und mit einer an wenigstens einer Überwachungszentrale anschliessbaren Anzeige- und/oder Bedienungsvorrichtung.

Eine derartige Fernüberwachungseinrichtung ist bereits aus der Zeitschrift «Signal und Draht» 54 (1962) 3, Seiten 48 bis 51, bekannt.

Bei der bekannten Fernüberwachungseinrichtung ist je Überwachungsstelle wenigstens ein Frequenzerzeuger vorgesehen. Der Zähler weist je Station eine oder mehrere Stufen auf. Im Falle einer Übertragung der Meldungen nach dem Zeitmultiplex-Fre-quenzmultiplex-Verfahren enthalten die Überwa-chungsstellen jeweils mehrere Frequenzerzeuger zur Aussendung von Mehrfrequenzcodesignalen in Abhängigkeit vom Zustand mehrerer Meldungsgeber. Die Steuerimpulse zur synchronen Weiterschaltung der Zähler sind tonfrequente Impulse, die jeweils in einem Signalempfänger ausgefiltert, verstärkt und gleichgerichtet werden, bevor sie dem Taktsteuereingang des Zählers zugeführt werden. Nach jedem Abfragezyklus folgt eine Pause als Synchronisationszeichen, das alle auf Null stellt. Eine Einrichtung zur Zählerüberwachung kontrolliert den Zähler. Um Meldungen frequenzmultiplex übertragen zu können, sind je Überwachungsstelle mehrere Frequenzerzeuger erforderlich.

Weiterhin ist aus der Druckschrift «Telcom Report» 2 (1979) Beiheft «Digitale-Übertragungstechnik», Seiten 170 bis 172, eine Fernüberwachungseinrichtung bekannt, die zur unterbrechungsfreien Fehlerortung von Übertragungsstrecken dient. Bei einer Ausführungsform dieser Fernübertragungseinrichtung wird am Ort der Überwachungszentrale der Zustand der ankommenden Übertragungsstrecken überwacht. Aus den dabei gewonnenen Zustandsmeldungen und über eine Ortungsleitung übertragenen Meldungen über fehlerhafte Zwischenstellen lassen sich gestörte Zwischenregeneratoren eindeutig bestimmen, sofern Fehlermeldungen nicht gleichzeitig bei verschiedenen Systemen innerhalb der überwachten Übertragungsstrecke auftreten.

Weiterhin sind aus der DE-OS 2 903 493 bereits ein Verfahren und eine Anordnung zur Fehlerortung und Überwachung einer Nachrichtenverbindung bekannt, bei der die jeweils in k Zwischenstellen enthal-tenen l Überwachungseinrichtungen nach Art einer Matrix so angeordnet sind, dass die eine Matrixkoordinate die Angabe über die jeweilige Zwischenstelle und die andere Matrixkoordinate die Angabe über die jeweilige Überwachungseinrichtung darstellt.

Aufgabe der Erfindung ist es, eine Einrichtung der eingangs näher bezeichneten Art derart auszubilden, dass sich für die gewünschte Zeitmultiplex-Fre-quenzmultiplex-Übertragung in den Überwachungs-stellen ein möglichst geringer Bedarf an Frequenzerzeugern ergibt und dass sich die in der Überwachungszentrale empfangenen Meldungen dabei auf einfach realisierbare Weise dekodieren und übersichtlich zur Anzeige bringen lassen.

Gemäss der Erfindung wird die Fernübertragungseinrichtung der eingangs näher bezeichneten Art der-art ausgebildet, dass den Überwachungsstellen eige-ne Meldefrequenzen zugeordnet sind und dass Meldungen verschiedener Überwachungsstellen über die Wähler, die in gleichartige Stufen synchron schaltbar sind, den Meldefrequenzsendern gleichzeitig zuführbar sind, und dass die Schnittstelle zwischen der Zentrale und der Anzeige- und/oder Bedienungsvorrichtung einen Bus mit einer Leitung je Überwachungsstelle und wenigstens einen weiteren Bus zur Übertragung von binär codierten Werten für die Stellung der Wähler enthält.

Dabei können die Wähler als elektronische Wähler, insbesondere als Zähler mit daran angeschlossenen elektronischen Schaltern, ausgebildet sein. Der in der Überwachungszentrale vorgesehene Speicher für die jeweilige Wählerstellung kann ein Wähler oder vorzugsweise ein RAM sein. Zur Erzeugung der Meldungen können in den Überwachungsstellen jeweils eine zentrale Überwachungseinrichtung oder mehrere Überwachungseinrichtungen vorgesehen sein. Enthält die Überwachungsstelle mehrere Meldungsgeber, die jeweils als Überwachungseinrichtung zur Überwachung einer physikalischen Grösse oder Einrichtung ausgebildet sind, so werden die Meldungs-geber zweckmässigerweise von verschiedenen Aus-gängen des Wählers her abgefragt. Werden nach einer anderen Variante der Fernüberwachungseinrichtung mehrere physikalische Grössen oder Einrichtungen mit Hilfe einer zentralen Überwachungseinrichtung der Überwachungsstelle überwacht, so wird die zentrale Überwachungseinrichtung zweckmässigerweise mit Hilfe des Wählers mit einer zeitlichen Folge der zu überwachenden physikalischen Grössen oder von Signalen beaufschlagt, aus denen sich ein Kriterium für den Zustand der zu überwachenden Einrichtung ableiten lässt.

Durch die erfindungsgemässen Massnahmen ergibt sich der Vorteil, dass sich die Überwachungsstellen mit besonders geringem Aufwand realisieren lassen. Ein weiterer Vorteil besteht darin, dass sich für eine Fernspeisung der Überwachungsstellen eine besonders niedrige Leistungsaufnahme und dadurch eine besonders grosse Reichweite der Fernspeisung ergibt.

In weiterer Ausgestaltung der Erfindung wird die Fernüberwachungseinrichtung derart ausgebildet, dass bei Ausbildung als Einrichtung zur Fehlerortung bei einer aus mehreren parallelen Nachrichten-Übertragungseinrichtungen bestehenden Nachrichtenverbindung die Meldungen jeweils den Nachrichten-Übertragungseinrichtungen zugeordnet sind und jeweils eine Zustandsmeldung über den Zustand der Nachrichten-Übertragungseinrichtung sind.

Die Überwachungsstellen sind dabei vorzugsweise jeweils einer der Zwischenstellen der Nachrichtenverbindung zugeordnet, in der bei Trägerfrequenzsignalen eine Entzerrer- und Verstärkeranordnung und bei digitalen Signalen zusätzlich eine Anordnung zur zeitlichen Regenerierung dieser Signale vorgesehen sind. Die Zustandsmeldungen werden bei Übertragungseinrichtungen der Trägerfrequenztechnik insbesondere durch Überwachung des jeweiligen Leitungspilots gewonnen. Bei Nachrichtenverbindungen für digitale Signale wird in den Überwachungseinrichtungen zweckmässigerweise die Einhaltung des jeweils verwendeten Codegesetzes überwacht.

In Weiterbildung der Erfindung ist in der Anzeige- und/oder Bedienungseinrichtung je Überwachungsstelle ein Anzeigeelement und für die Stufen des Wählers ein Ziffernanzeigeelement vorgesehen. Dabei ergibt sich in vorteilhafter Weise eine besonders übersichtliche Anzeige der Meldungen bei besonders geringem Decodieraufwand.

Zweckmässigerweise wird die Fernüberwachungseinrichtung derart ausgebildet, dass die Überwachungsstellen mittels einer an die Überwachungszentrale angeschlossenen Fernspeiseeinrichtung gemeinsam ferngespeist sind und dass die Weiterschaltimpulse und Synchronisierimpulse zur Rücksetzung der Wähler durch verschieden lange, durch die Überwachungszentrale gesteuerte impulsweise Unterbrechungen des Fernspeisestromes gebildet sind und dass die Überwachungsstellen jeweils mit einem Energiespeicher zur zeitlichen Überbrückung der Unterbrechungen des Fernspeisestromes und mit einer Einrichtung zur Impulserkennung versehen sind.

In Weiterbildung der Erfindung überwacht sich die Fernüberwachungseinrichtung dadurch selbst, dass die Meldefrequenzsender durch die Meldungen derart steuerbar sind, dass bei Vorliegen einer Meldung die Aussendung der stationseigenen Meldefrequenz unterbrochen wird.

Man kann die Anzeige- und/oder Bedienungseinrichtung direkt an die Überwachungszentrale anschliessen. Bei grösseren Entfernungen ist dagegen eine Ausgestaltung der Fernüberwachungseinrichtung zweckmässig, bei der eine Fernwirkeinrichtung zwischen der Überwachungszentrale und der Anzeige- und/oder Bedienungsvorrichtung angeordnet und die Aussendung der Weiterschaltimpulse durch die Fernwirkeinrichtung steuerbar ist.

In vorteilhafter Weise werden dabei durch die Überwachungszentrale jeweils nur so viele Meldungen abgegeben, wie über die Fernwirkeinrichtung weiter übertragen werden können.

Um eine gewünschte Meldung aus den Überwachungsstellen gezielt abfragen zu können, ist die Überwachungszentrale zweckmässigerweise durch die Bedienungsvorrichtung derart steuerbar, dass sie eine vorgegebene Zahl von Weiterschaltimpulsen in einem gegenüber der Weiterschaltung bei zyklischer Abfrage schnelleren Suchlauf abgibt.

Um auch bei diesem Betriebsfall, bei dem keine laufende Synchronisierung stattfindet, Störeinflüsse unwirksam zu machen, ist der schnellere Suchlauf zweckmässigerweise selbsttätig periodisch wiederholbar.

Zweckmässigerweise enthält die Überwachungszentrale einen Binärspeicher zum Speichern der jeweiligen Stellung der in den Überwachungsstellen enthaltenen Wähler.

Andererseits kann es sich als zweckmässig erweisen, dass die Überwachungszentrale eine Einrichtung zum Alt-Neu-Vergleich enthält und dass bei festgestellter Ungleichheit die Aussendung von Weiterschaltimpulsen unterbrechbar ist.

Die Erfindung wird anhand der in den Figuren dargestellten Ausführungsbeispiele näher erläutert. Es zeigen:

Fig. 1 ein Blockschaltbild einer Fernüberwachungseinrichtung, bei der mehrere Überwachungszentralen über eine Fernwirkeinrichtung an eine Hauptzentrale geführt sind,

Fig. 2 eine Überwachungsstelle mit einer Einrichtung zur Codeüberwachung,

Fig. 3 eine Überwachungsstelle mit zyklischer Anschaltung von Meldungsgebern und

Fig. 4 eine Überwachungszentrale, die zusammen mit weiteren Überwachungszentralen an eine Unterstation einer Fernwirkeinrichtung angeschlossen ist.

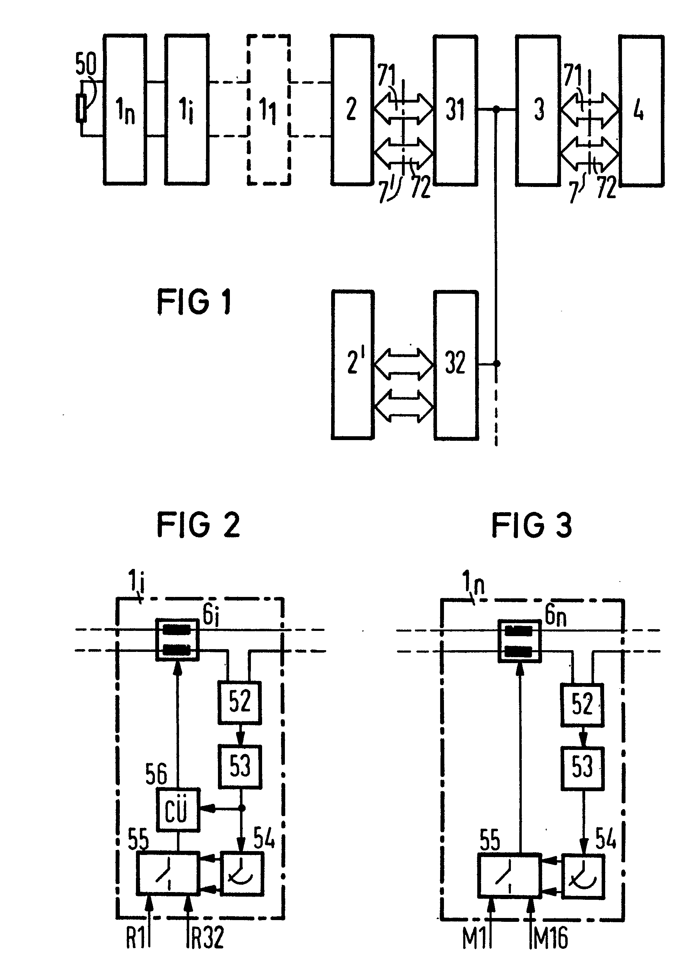

Fig. 1 zeigt eine Fernüberwachungseinrichtung zur Überwachung eines linienförmigen Übertragungsnetzes. An eine Überwachungszentrale 2 sind über eine gemeinsame Meldeleitung, die an ihrem Ende über den Widerstand 50 abgeschlossen ist, Überwachungsstellen $1_1...1_i...1_n...$ angeschlossen. Um die in der Übertragungszentrale 2 gespeicherten Meldungen an eine Anzeige- und/oder Bedienungseinrichtung 4 übertragen zu können, ist die Überwachungszentrale 2 über eine Schnittstelle 7' mit einer Unterstation 31 einer Fernwirkeinrichtung verbunden. Die Zentrale 3 der Fernwirkeinrichtung ist über eine gemeinsame Übertragungsleitung mit mehreren Unterstationen verbunden, von denen in der Figur lediglich die Unterstationen 31 und 32 dargestellt sind. Auch die Unterstation 32 ist über eine Busleitung mit einer weiteren Überwachungszentrale 2' verbunden. An die Zentrale 3 ist die Anzeige- und/oder Bedienungseinrichtung 4 über die Schnittstelle 7 angeschlossen.

Die Fernüberwachungseinrichtung überwacht die PCM-Information entlang der Übertragungsstrecke auf Code-Verletzungen und meldet diese an die Überwachungszentrale 2. Diese übernimmt die Auswertung der anfallenden Meldungen und übergibt der Fernwirkstation 31 die zur Anzeige der entsprechenden Meldungen nötigen Daten. Diese Daten werden per Telegramm zu der Zentrale 3 übertragen und dort mittels der Anzeige- und Bedienungseinrichtung 4 zur Anzeige gebracht.

Einzelheiten der Fernüberwachungseinrichtung nach Fig. 1 gehen aus den Figuren 2 bis 4 hervor.

Die Überwachungsstellen $1_1...1_n$ sind entsprechend Fig. 2 oder 3 aufgebaut. Die in Fig. 2 gezeigte

Überwachungsstelle $1_i$ enthält jeweils einen Tonfrequenzsender $6_i$, der in die Meldeleitung eingeschleift ist. Jeder Überwachungsstelle ist eine eigene Tonfrequenz und je Überwachungsstelle jeder Meldung eine Wählerstellung zugeordnet. Der Ort der Meldung wird demnach im Frequenzmultiplexverfahren übermittelt, während die Nummer der Meldung im Zeitmultiplexverfahren übertragen wird.

In einer Ader der Meldeleitung ist eine Einrichtung 52 zur Stromversorgung eingeschleift, an welche eine Einrichtung 53 zur Takterkennung angeschlossen ist, die einen Wähler 54 steuert. Die am Ort der PCM-Zentrale befindliche Überwachungszentrale 2 steuert die Wähler 54 aller Überwachungsstellen $1_1...1_i...i_n$ gemeinsam, indem sie den Fernspeisestrom kurzzeitig unterbricht. Die Einrichtung 53 zur Takterkennung in der Überwachungsstelle wertet eine Unterbrechung im Bereich zwischen 50 ms und 250 ms als Weiterschaltimpuls und eine Unterbrechung von mindestens 500 ms als Synchronisierungsimpuls aus. In der Nullstellung des Wählers 54 wird die Tonübertragungseinrichtung überprüft. Die folgenden 32 Stellungen sind den PCM-Regeneratoren zugeordnet.

Damit die Versorgungsspannung während der Austastdauer nicht zusammenbricht, überbrückt — was in der Figur nicht dargestellt ist — ein Kondensator, der über eine Diode von der Fernspeiseleitung entkoppelt ist, diese Lücken. Durch den Wähler 54 werden die Schalter eines Schalterteiles 55 gesteuert. Jeder Schalter des Schalterteiles 55 liegt zwischen einem der nicht näher dargestellten Regeneratoren und einer Einrichtung 56 zur Codeüberwachung, die ebenfalls vom Ausgang der Einrichtung 53 her taktsteuerbar ist. Die Regeneratorsignale $R1...R32$ werden somit zur Auswertung zyklisch an die Einrichtung 56 gelegt, die in einem festgelegten Zeitintervall das PCM-Signal auf Code-Verletzungen prüft. Wird eine bestimmte Fehlerzahl überschritten, gibt die Schaltung ein Alarmsignal ab. Diese Einrichtung 56 gibt in zyklischer Folge Zustandsmeldungen über den Zustand der Nachrichtenübertragungseinrichtungen an den Tonsender $6_i$ ab.

Alle Überwachungsstellen ausser einer sind in dieser Weise ausgebildet. Eine Ausnahme bildet die Überwachungsstelle in einer Endstelle $1_n$ der Nachrichtenübertragungsstrecke, die keine Einrichtung 56 zur Codeüberwachung enthält. Hier werden entsprechend Fig. 3 die bereits von den PCM-Endeinrichtungen gelieferten Alarmsignale $M1...M16$ mit Hilfe des Schalterteiles 55 nacheinander abgefragt und zum Tonfrequenzsender $6_n$ durchgeschaltet.

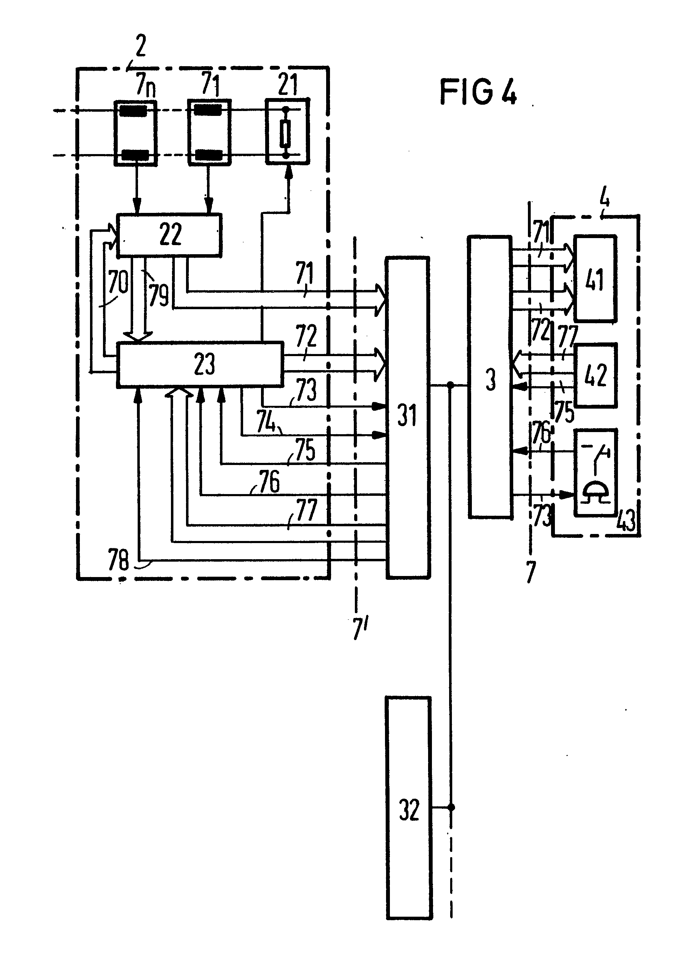

Am Ende der Übertragungsstrecke befindet sich die in Fig. 4 dargestellte Überwachungszentrale 2. An die Zentraleinheit 23 der Überwachungszentrale 2 sind die Fernspeiseeinrichtung 21 und das Schaltfeld 22 angeschlossen. Zur Verbindung des Schaltfeldes 22 mit der Zentraleinheit 23 dienen der Bus 70 und der Bus 79.

Die Anzeige- und Bedienungsvorrichtung 4 ist von der Überwachungszentrale 2 abgesetzt. Mit der Fernwirkeinrichtung 31, 3 mit Anreiztechnik werden die erforderlichen Daten übertragen. Die Schnittstelle 7 zwischen Zentrale und Anzeige- bzw. Bedienungsvorrichtung 4 ist dabei so konzipiert, dass bei Zwischenschaltung der Fernwirkeinrichtung keine Änderungen erforderlich sind.

Die Überwachungszentrale 2 enthält je Überwachungsstelle einen Tonfrequenzempfänger $7_1...7_n$. Die Tonfrequenzempfänger geben die den Meldungen entsprechenden digitalen Signalzustände an das Schaltfeld 22 der Zentrale 2 ab. Von der Zentrale 2 gelangen sie zu einem Anzeigefeld 41, wo sie zur Anzeige gebracht werden. Ein Bedienungsfeld 42 erlaubt es, die Wähler 54 auf einer gewünschten Stellung anzuhalten.

Die von den Tonfrequenzempfängern $7_1...7_i...7_n$ abgegebenen Meldungen werden im Schaltfeld 22 der Überwachungszentrale 2 gespeichert und nach einem Alt-Neu-Vergleich zusammen mit einem eventuellen Alarmsignal und der momentanen, DCB-codierten Wählerstellung der Fernwirkeinrichtung zur Übertragung an eine zentrale Stelle übergeben. Dort werden in einem Anzeigefeld 41 die Meldungsorte mit Leuchtdioden und die Wählerstellung mit Leuchtziffern angezeigt. Das Bedienungsfeld 42 erlaubt ein Umschalten auf manuellen Betrieb, indem mit einem Codierschalter eine von den möglichen Wählerstellungen zur Dauerüberwachung ausgesucht wird.

Die Anzeige- und Bedienungsvorrichtung 4 ist über die Schnittstelle 7 an die Zentrale 3 angeschlossen. Die Unterstation 31 ist über die Schnittstelle 7' mit der Überwachungszentrale 2 verbunden.

Die Schnittstelle 7 enthält folgende Leitungen.

71 Bus mit einer Leitung je Überwachungsstelle
72 Bus für den Istwert der Wählerstellung im BCD-Code
73 Alarmleitung
74 Leitung für Anreizkriterium
75 Leitung für Anreiz
76 Leitung für Quittungssignal
77 Bus für den Sollwert der Wählerstellung

Die Schnittstelle 7' enthält zusätzlich noch die Leitung 78 für ein Kriterium «Unterstation bereit zur Datenübernahme».

Die Ablaufsteuerung der Überwachungszentrale beginnt mit einer Unterbrechung der Fernspeisestromes von etwa 500 ms Dauer. Dies wird von den Überwachungsstellen $1_1...1_i$ als Synchronisierimpuls erkannt, und alle Wähler 54 werden auf Stellung Null gestellt. In dieser Stellung wird die Fernüberwachungseinrichtung ihrerseits überwacht. Da die Tonfrequenzsender $6_1...6_n$ nach dem Ruhestromprinzip arbeiten, muss bei fehlerfreiem Betrieb von jedem Sender ein Ton empfangen werden.

Als nächstes folgen m Weiterschaltimpulse von etwa 250 ms Dauer entsprechend der dazugehörigen m Meldungsorte. Jeweils zwischen zwei Weiterschaltimpulsen werden in der Überwachungszentrale 2 die empfangenen Meldungen mit den vom vorhergehenden Umlauf abgespeicherten Meldungen verglichen. Bei Ungleichheit gibt die Überwachungszentrale 2 ein Alarmsignal an die Vorrichtung 43 ab und liefert keine Weiterschaltimpulse mehr. Die Wählerstellung und der dazugehörige Meldungsort sind so lange auf dem Anzeigefeld 41 zu sehen, bis durch Drücken einer Quittiertaste die Überwachungszentrale aufgefordert wird, im Abfragezyklus fortzufahren. Ist die Wählerstellung m erreicht, beginnt mit dem Aussenden eines Synchronisierimpulses ein neuer Zyklus.

Das Anzeigefeld 41 zeigt normalerweise jede Wählerstellung und die dazugehörigen Meldungsorte an. Wahlweise kann aber auch nur eine Anzeige neu hinzugekommener Meldungen erfolgen.

Ist im Bedienungsfeld 42 durch entsprechende Einstellung eines insbesondere zweistelligen Codierschalters eine bestimmte Wählerstellung zur Anzeige ausgewählt worden, unterbricht die Überwachungszentrale den normalen Zyklus und startet mit einem Synchronisierimpuls und durch Aussenden von Weiterschaltimpulsen einen schnellen Suchlauf, bis die gewünschte Wählerstellung erreicht ist. Dieser Codierschalter erlaubt es, die Fernüberwachungseinrichtung auf einer bestimmten Wählerstellung festzuhalten und die Meldungen dauernd anzuzeigen. Die Verarbeitung der empfangenen Meldungen wird nun wie beim Abfragezyklus fortgesetzt, ohne dass Weiterschaltimpulse ausgesendet werden. Die Zentrale startet in bestimmten Zeitabständen, z.B. alle 5 Minuten, einen schnellen Suchlauf. Damit wird der Gleichlauf der Wähler wiederhergestellt, falls durch Einwirken von Fremdspannungen auf die Fernspeiseleitung die Wähler 54 unkontrolliert weitergeschaltet worden sein sollten.

Sind an die Fernwirkeinrichtung mehrere Meldeeinrichtungen bzw. Überwachungszentralen 2, 2' angeschlossen, kann die Zeit zwischen zwei Weiterschaltimpulsen zu kurz für die Datenübertragung sein. Die Überwachungszentrale kann sich deshalb automatisch mit ihrem Weiterschalttakt an die Übertragungsgeschwindigkeit der Fernwirkeinrichtung anpassen. So wird verhindert, dass Daten dadurch verlorengehen, dass die Überwachungszentrale bereits neue Daten liefert, bevor die zuvor angelegten zur Übertragung abgeholt werden. Die Überwachungszentrale 2 sendet dabei nur dann Weiterschaltimpulse aus, wenn sie von der Fernwirkeinrichtung hierzu freigegeben wird.

Da im Interesse einer grossen Reichweite der Fernspeisestrom möglichst klein sein soll, werden in den Überwachungsstellen zweckmässigerweise CMOS-Schaltkreise verwendet, die auch eine durch das Takten des Speisestromes schwankende Betriebsspannung erlauben. In der Überwachungszentrale übernimmt insbesondere ein Mikroprozessor die Steuerfunktion. Leuchtziffern zeigen in der Anzeige- und Bedienungseinheit 4 die Wählerstellung an, die Meldungsorte werden mit Leuchtdioden sichtbar gemacht. Bei Handbetrieb kann die gewünschte Wählerstellung mit einem aus zwei Ziffern bestehenden Codierschalter eingestellt werden.

**Patentansprüche**

1. Fernüberwachungseinrichtung, insbesondere zur Fehlerortung auf Nachrichten-Übertragungsstrecken, mit wenigstens einer Anordnung zur Übertragung von Meldungen nach einem Zeitmultiplex-Frequenzmultiplex-Verfahren, die eine Überwachungszentrale (2) und mehrere, über einen gemeinsamen Signalübertragungsweg mit der Überwachungszentrale verbundene Überwachungsstellen $(1_1...1_i...1_n)$ enthält, wobei die Überwachungszentrale (2) einen Sender zum Aussenden von Weiterschaltimpulsen und die mit Meldefrequenzsendern versehenen Überwachungsstellen jeweils einen durch die Weiterschaltimpulse steuerbaren und gemeinsamen in eine Nullstellung überführbaren Wähler (54) zur Überwachung mehrerer Meldungsorte pro Überwachungsstelle und die Überwachungszentrale einen Speicher für die jeweilige Wählerstellung enthalten und Meldungen einer Station mit Hilfe des Wählers in zeitlicher Folge wenigstens einem Meldefrequenzsender zugeführt sind und die Aussendung der Meldefrequenzen in Abhängigkeit vom jeweiligen Meldezustand erfolgt, und mit einer an wenigstens einer Überwachungszentrale anschliessbaren Anzeige- und/oder Bedienungsvorrichtung (4), dadurch gekennzeichnet, dass den Überwachungsstellen $(1_1...1_i...1_n)$ eigene Meldefrequenzen $(f_1...f_i...f_n)$ zugeordnet sind und dass Meldungen verschiedener Überwachungsstellen $(1_1...1_i...1_n)$ über die Wähler (54), die in gleichartigen Stufen synchron schaltbar sind, den Meldefrequenzsendern gleichzeitig zuführbar sind, und dass die Schnittstelle (7) zwischen der Zentrale (31) und der Anzeige- und/oder Bedienungsvorrichtung (4) einen Bus (71) mit einer Leitung je Überwachungsstelle $(1_1...1_i...1_n)$ und wenigstens einen weiteren Bus (72) zur Übertragung von binär codierten Werten für die Stellung der Wähler (55) enthält.

2. Fernüberwachungseinrichtung nach Anspruch 1, dadurch gekennzeichnet, dass bei Ausbildung als Einrichtung zur Fehlerortung bei einer aus mehreren parallelen Nachrichten-Übertragungseinrichtungen bestehenden Nachrichtenverbindung die Meldungen jeweils den Nachrichten-Übertragungseinrichtungen zugeordnet sind und jeweils eine Zustandsmeldung über den Zustand der Nachrichten-Übertragungseinrichtung sind.

3. Fernüberwachungseinrichtung nach Anspruch 1 oder 2, dadurch gekennzeichnet, dass in der Anzeige- und/oder Bedienungseinrichtung (4) je Überwachungsstelle $(1_1...1_i...1_n)$ ein Anzeigeelement und für die Stufen des Wählers (54) ein Ziffern-Anzeigeelement vorgesehen ist.

4. Fernüberwachungseinrichtung nach einem der Ansprüche 1 bis 3, dadurch gekennzeichnet, dass die Überwachungsstellen $(1_1...1_i...1_n)$ mittels einer an die Überwachungszentrale (31) angeschlossenen Fernspeiseeinrichtung (21) gemeinsam ferngespeist sind und dass die Weiterschaltimpulse und Synchronisierimpulse zur Rücksetzung der Wähler durch verschieden lange, durch die Überwachungszentrale (2) gesteuerte, impulsweise Unterbrechungen des Fernspeisestromes gebildet sind und dass die Überwachungsstellen $(1_1...1_i...1_n)$ jeweils mit einem Energiespeicher zur zeitlichen Überbrückung der Unterbrechungen des Fernspeisestromes und mit einer Einrichtung zur Impulserkennung versehen sind.

5. Fernüberwachungseinrichtung nach einem der Ansprüche 1 bis 3, dadurch gekennzeichnet, dass die Meldefrequenzsender durch die Meldungen derart steuerbar sind, dass bei Vorliegen einer Meldung die Aussendung der stationseigenen Meldefrequenz $(f_1...f_i...f_n)$ unterbrochen wird.

6. Fernüberwachungseinrichtung nach einem der Ansprüche 1 bis 5, dadurch gekennzeichnet, dass bei Anordnung einer Fernwirkeinrichtung (31, 3) zwischen der Überwachungszentrale (2) und der Anzeige- und/oder Bedienungsvorrichtung (4) die Aussendung der Weiterschaltimpulse durch die Fernwirkeinrichtung steuerbar ist.

7. Fernüberwachungseinrichtung nach einem der Ansprüche 1 bis 6, dadurch gekennzeichnet, dass die Überwachungszentrale (2) durch die Bedienungsvorrichtung (4) derart steuerbar ist, dass sie eine vorgegebene Zahl von Weiterschaltimpulsen in einem gegenüber der Weiterschaltung bei zyklischer Abfrage schnelleren Suchlauf abgibt.

8. Fernüberwachungseinrichtung nach Anspruch 7, dadurch gekennzeichnet, dass der schnellere Suchlauf selbsttätig wiederholbar ist.

9. Fernüberwachungseinrichtung nach einem der Ansprüche 1 bis 8, dadurch gekennzeichnet, dass die Überwachungszentrale (2) eine Einrichtung zum Alt-Neu-Vergleich enthält und dass bei festgestellter Ungleichheit die Aussendung von Weiterschaltimpulsen unterbrechbar ist.

## Claims

1. A remote monitoring device, in particular for the error location on data transmission links, with at least one arrangement for transmitting messages in accordance with the time division multiplex-frequency division multiplex method, which comprises a monitoring central unit (2) and a plurality of monitoring stations ($1_1...1_i...1_n$) which are connected to the monitoring central unit by means of a common signal transmission path, where the monitoring central unit (2) comprises a transmitter for transmitting operating pulses and the monitoring stations, which are provided with report frequency transmitters, respectively comprise a common selector (54) which can be controlled by the operating pulses and transferred into a neutral status and which serves to monitor a plurality of report locations for each monitoring station, and the monitoring central unit comprises a store for the respective selector position and reports of one station are fed to at least one report frequency transmitter in a time sequence with the aid of the selector and the transmission of the report frequencies is effected in dependence upon the respective report state, and with a display and/or operating device (4) which can be connected to at least one monitoring central unit, characterised in that the monitoring stations ($1_1...1_i...1_n$) are assigned separate report frequencies ($f_1...f_i...f_n$) and that reports of different monitoring stations ($1_1...1_i...1_n$) can be simultaneously fed to the report frequency transmitters by means of the selectors (54) which are synchronously switchable in similar stages, and that the interface (7) between the central unit (31) and the display and/ or operating device (4) comprises a bus (71) with a line for each monitoring station ($1_1...1_i...1_n$) and at least one further bus (72) for transmitting binary coded values for the position of the selectors (55).

2. A remote monitoring device as claimed in claim 1, characterised in that when designed as a device for the error location in a communications connection, which comprises a plurality of parallel communications transmission devices, the reports are respectively assigned to the communications transmission devices and in each case a status report about the state of the communications transmission device.

3. A remote monitoring device as claimed in claim 1 or 2, characterised in that in the display and/or operating device (4) for each monitoring station ($1_1...1_i...1_n$) is arranged a display element and a figure display element for the stages of the selector (54).

4. A remote monitoring device as claimed in one of claims 1 to 3, characterised in that the monitoring stations ($1_1...1_i...1_n$) are remote-fed in common my means of a remote feeding device (21) which is connected to the monitoring central unit (31), and that in order to reset the selectors the operating pulses and synchronising pulses are formed by differently long pulse-wise interruptions of the remote-feeding current which is controlled by the monitoring central unit (2), and that the monitoring stations ($1_1...1_i...1_n$) are respectively provided with an energy store for the time-bridging of the interruptions of the remote-feeding current and with a device for the pulse recognition.

5. A remote monitoring device as claimed in one of claims 1 to 3, characterised in that the report frequency transmitters are controllable by the reports in such manner that the transmission of the station-individual report frequency ($f_1...f_i...f_n$) is interrupted when a report is present.

6. A remote monitoring device as claimed in one of claims 1 to 5, characterised in that when a remote control device (31, 3) is arranged between the monitoring central unit (2) and the display and/or operating device (4) the transmission of the operating pulses is controllable by the remote control device.

7. A remote monitoring device as claimed in one of claims 1 to 6, characterised in that the monitoring central unit (2) is controllable by the operating device (4) in such manner that it transmits a predetermined number of operating pulses in a search run which is faster compared with the relaying during cyclic interrogation.

8. A remote monitoring device as claimed in claim 7, characterised in that the faster search run is automatically repeated in cylces.

9. A remote monitoring device as claimed in one of claims 1 to 8, characterised in that the monitoring central unit (2) comprises a device for the old-new-comparison and that upon established inequality the transmission of operating pulses can be interrupted.

## Revendications

1. Dispositif de télésurveillance, notamment pour la localisation de défauts dans des voies de transmission d'informations, comportant au moins un dispositif pour transmettre des signalisations selon un procédé de multiplexage temporel et de multiplexage de fréquences, qui contient un central contrôle (2) et plusieurs postes de contrôle ($1_1...1_i...1_n$) reliés au central de contrôle par l'intermédiaire d'une voie commune de transmission de signaux, et dans lequel le central de contrôle (2) comporte un émetteur servant à envoyer les impulsions d'avance, et les postes de contrôle équipés d'émetteurs de fréquences de signalisation contiennent respectivement un sélecteur (54) commun pouvant être commandé par les impulsions d'avance et pouvant être amené dans une position neutre et qui sert à contrôler plusieurs emplacements de signalisation, pour chaque poste de contrôle, et le central de contrôle contient une mémoire servant à la mémorisation de la position respective du sélecteur et dans lequel des signalisations d'un poste sont envoyées successivement dans le temps, à l'aide du sélecteur, au moins à un émetteur de fréquence de signalisation, et l'émission des fréquences de signalisation s'effectue en fonction de l'état respectif de signalisation, et comportant un dispositif d'affichage et/ou de service (4) pouvant être raccordé à au moins un central de contrôle, caractérisé par le fait que des fréquences propres de signalisation $(f_1...f_i...f_n)$ sont associées aux postes de contrôle $(1_1...1_i...1_n)$ et que des signalisations provenant de fifférents postes de contrôle $(1_1...1_i... 1_n)$ peuvent être envoyées simultanément aux émetteurs de fréquences de signalisation par l'intermédiaire des sélecteurs (54), qui peuvent être branchés en synchronisme dans des étages identiques, et que l'interface (7) entre le central (31) et le dispositif d'affichage et/ou de service (4) contient un bus (71) comportant une ligne pour chaque poste de contrôle $(1_1...1_i...1_n)$ et au moins un autre bus (72) pour la transmission de valeurs codées en binaire pour la position des sélecteurs (55).

2. Installation de télésurveillance suivant la revendication 1, caractérisé par le fait que dans le cas de sa réalisation sous la forme d'un dispositif de localisation de défauts dans un système de communications constitué par plusieurs dispositifs parallèles de transmission d'informations, les signalisations sont associées respectivement aux dispositifs de transmission d'information et constituent des signalisations relatives aux états respectifs des dispositifs de transmission d'information.

3. Dispositif de télésurveillance suivant la revendication 1 ou 2, caractérisé par le fait qu'un élément d'affichage est prévu, pour chaque poste de contrôle $(1_1...1_i...1_n)$, dans le dispositif d'affichage et/ou de service (4) et qu'un élément d'affichage à chiffres est prévu pour les échelons du sélecteur (54).

4. Dispositif de télésurveillance suivant l'une des revendications 1 à 3, caractérisé par le fait que les postes de contrôle $(1_1...1_i...1_n)$ sont alimentés à distance en commun au moyen d'un dispositif d'alimentation à distance (21) raccordé au central de contrôle (31) et que les impulsions d'avance et les impulsions de synchronisation servant à faire rétrograder les sélecteurs sont constituées par des interruptions impulsionnelles du courant d'alimentation à distance, possédant des durées différentes et commandées par le central de contrôle (2) et que les postes de contrôle $(1_1...1_i...1_n)$ sont munis chacun d'un accumulateur d'énergie servant à supporter dans le temps les interruptions du courant alimentation du courant à distance et un dispositif d'identification d'impulsions.

5. Dispositif de télésurveillance suivant l'une des revendications 1 à 3, caractérisé par le fait que les émetteurs de fréquences de signalisation peuvent être commandés par des signalisations de telle sorte que lors de la présence d'une signalisation, l'émission de la fréquence de signalisation $(f_1...f_i...f_n)$ propre au poste est interrompue.

6. Dispositif de télésurveillance suivant l'une des revendications 1 à 5, caractérisé par le fait que dans le cas où un dispositif de télécommande (31, 3) est prévu entre le central de surveillance (2) et le dispositif d'affichage et/ou de service (4), l'émission des impulsions d'avance peut être commandée par le dispositif de télécommande.

7. Dispositif de télésurveillance suivant l'une des revendications 1 à 6, caractérisé par le fait que le central de contrôle (2) peut être commandé par le dispositif de service (4) de manière qu'il délivre un nombre prédéterminé d'impulsions d'avance aucours d'un cycle de recherche plus rapide que l'avance intervenant lors de l'interrogation cyclique.

8. Dispositif de télésurveillance suivant la revendication 7, caractérisé par le fait que le cycle de recherche plus rapide peut être répété périodiquement de façon automatique.

9. Dispositif de télésurveillance suivant l'une des revendications 1 à 8, caractérisé par le fait que le central de contrôle (2) contient un dispositif de comparaison valeur ancienne-valeur nouvelle et que, dans le cas où l'inégalité est établie, l'émission d'impulsions d'avance peut être interrompue.

**FIG 1**

**FIG 2**

**FIG 3**

FIG 4